# EUROPEAN PATENT SPECIFICATION

(11) **EP 0 825 301 B1**
(45) Date of publication and mention of the grant of the patent: **04.04.2001**
(21) Application number: 97306119.5
(22) Date of filing: 12.08.1997
(51) Int. Cl.: E01D 19/14

(54) **Cable damping device**
Dämpfervorrichtung für Kabel
Dispositif amortisseur pour câbles

(30) Priority: 20.08.1996 JP 21835796
(43) Date of publication of application: 25.02.1998
(73) Proprietor: SUMITOMO RUBBER INDUSTRIES LIMITED, Kobe-shi, Hyogo-ken (JP)
(72) Inventor: Kato, Seinosuke, Nishinomiya-shi, Hyogo-ken (JP)
(74) Representative: Hillier, Peter

(56) References cited:
- PATENT ABSTRACTS OF JAPAN vol. 095, no. 004, 31 May 1995 & JP 07 003720 A (SUMITOMO CONSTR CO LTD), 6 January 1995,
- PATENT ABSTRACTS OF JAPAN vol. 018, no. 440 (M-1657), 17 August 1994 & JP 06 136718 A (NKK CORP), 17 May 1994,

## Description

### FIELD OF THE INVENTION

The invention relates to a device for damping vibration of cables used in a diagonal stress bridge.

### BACKROUND OF THE INVENTION

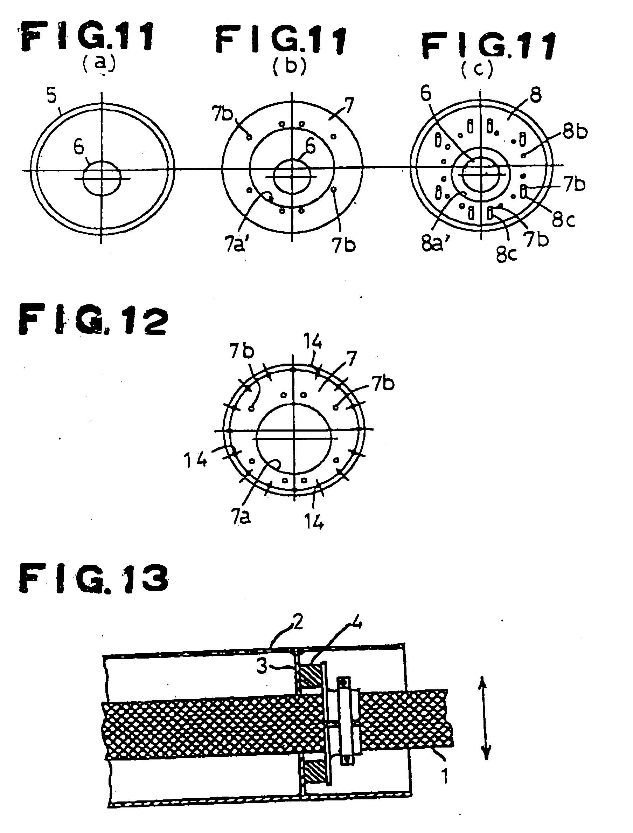

A construction for restricting or damping vibration of cables of a diagonal stress bridge is known in the art. Such a construction includes, as shown in Fig. 13, an anchor pipe 2 or protective pipe disposed at a position on a girder or tower of a bridge to which an end of cable 1 is connected. The anchor pipe 2 includes a flange 3 which encircles the cable 1. A plurality of visco-elastic bodies 4 are disposed between the flange 3 and the cable 1. Vibration of the cable 1 causes shear deformation in the visco-elastic bodies 4, so as to cause energy loss in the visco-elastic bodies 4, thus restricting or damping vibration of the cable 1 (see Japanese Patent Public Disclosure No. 06-136718 (KOKAI HEI-6-136718) and Japanese Patent Public Disclosure No. 07-3720 (KOKAI HEI-6-3720).

A diagonal stress bridge is constructed by first erecting main towers. Then, steel girders or girders of prestressed concrete are extended outwardly from the main towers. The girders are connected to and supported by the main towers using diagonal members (cables). Further girders are constructed in repetitive manner.

Thus, the amount of tension to be carried by the cables varies at a given time during the course from the initial stage to the completion of the construction work. Accordingly, the core of the cable 6 disposed centrally of the cables is caused to be offset from an intended position for design, or to be changed in its angle of inclination. In an actual large bridge, the amount of such an eccentricity may be even on the order of some tens millimeters.

Under the circumstances, the vibration damping device disclosed in Japanese Patent Public Disclosure No. 6-136718 or 7-3720 mentioned above is frequently difficult to be mounted between the anchor pipe 2 and the cable 1.

That is to say, the configuration of a visco-elastic body 4 is, in essence, determined by an expected spring constant or damping constant, and the thickness of the visco-elastic body is on the order of 20 to 80 millimeters. Thus, positional adjustment in the amount of some tens millimeters during mounting is not achieved by solely deforming the visco-elastic body.

In practice, the procedure of mounting the anchor pipe 2 on a girder 2 is delayed until the tension of the cable becomes unchanged as when the bridge is almost completed. Then, the longitudinal center of the anchor pipe 2 is aligned with the longitudinal center of the cable. This restricts fabrication work for girders and towers, or mounting work for the anchor pipes.

### SUMMARY OF THE INVENTION

It is an object of the invention to provide a vibration damping device which gives a high degree of freedom with regard to fabrication work, without causing the above-mentioned restriction during fabrication work.

According to the invention, a cable damping device is provided which includes an anchor pipe suitable for housing therein a fixed end of a cable, an anchor flange disposed at a free end of the anchor pipe for encircling the cable in a non-contact relationship therewith, a cable flange attached to the cable, and a plurality of visco-elastic bodies mounted between the anchor flange and the cable flange.

The cable damping device is characterised by comprising:
an aligning flange including a plurality of mounting portions to be mounted on the anchor flange in an eccentric relationship with the anchor flange, and a plurality of mounting seats on which the visco-elastic bodies disposed around the cable are mounted, whereby the aligning flange may be mounted on the anchor flange in a manner that the center defined by the plurality of mounting seats is aligned with the longitudinal center of the cable, and that the plurality of visco-elastic bodies are clamped between the aligning flange and the cable flange.

The mounting portions of the aligning flange may be a plurality of slotted holes, the slotted holes being formed through the aligning flange with the longitudinal axes of the slotted holes being aligned in one direction, whereby a plurality of bolts protruding from the anchor flange may be slidably received in the slotted holes.

The anchor flange, the cable flange and the aligning flange may be of a split construction, so that they are mounted to the cable and the anchor pipe at a later time.

The anchor flange may be adapted to be secured to the anchor pipe by means of bolts.

### BRIEF DESCRIPTION OF THE DRAWINGS

For a fuller understanding of the nature and objects of the present invention, reference should be had to the following detailed description taken in connection with the accompanying drawings wherein:
Fig. 1 shows a cable damping device according to one embodiment of the invention in an assembled state, wherein Fig. 1(a) is a cross-sectional view along line A-A of Fig. 1(b), and Fig. 1(b) is a cross-sectional view along line B-B of Fig. 1(a);
Fig. 2(a) is a cross-sectional view of an anchor flange of Fig. 1, and Fig. 2(b) is a front elevational view of the anchor flange;
Fig. 3(a) is a cross-sectional view of an aligning flange of Fig. 1, and Fig. 3(b) is a front elevational view of the aligning flange;
Fig. 4(a) is a cross-sectional view of a washer of Fig. 1 which is used to retain a bolt of the anchor flange protruding from a slotted hole in the aligning flange, and Fig. 4(b) is a front elevational view of the washer;
Fig. 5(a) is a front elevational view of a cable flange of Fig. 1, Fig. 5(b) is a side elevational view, in section, of the cable flange, and Fig. 5(c) is a rear view of the cable flange;
Fig. 6(a) is a plan view of a rubber sheet of Fig. 1, and Fig. 6(b) is a side elevational view of the rubber sheet;
Fig. 7(a) is a side elevational view of a high-damping rubber damper of Fig. 1, and Fig. 7 (b) is a front elevational view of the damper;
Fig. 8 illustrates a positional relationship between the anchor flange and the aligning flange mounted on the anchor pipe (when the cable and the anchor pipe is in concentric relationship);
Fig. 9 illustrates a positional relationship between the anchor flange and the aligning flange mounted on the anchor pipe (when the cable is offset in a downward direction);
Fig. 10 illustrates a positional relationship between the anchor flange and the aligning flange mounted on the anchor pipe (when the cable is offset in a downward and right-hand direction);
Fig. 11 illustrates a positional relationship between the anchor flange and the aligning flange mounted on the anchor pipe (when an anchor flange having an opening in concentric with its outer diameter);
Fig. 12 illustrates an end surface of an anchor pipe, the anchor pipe being formed in the end surface with bolts by which the anchor flange is secured to the anchor pipe; and
Fig. 13 shows a prior art cable damping device.

### DETAILED DESCRIPTION OF THE PREFERRED EMBODIMENTS

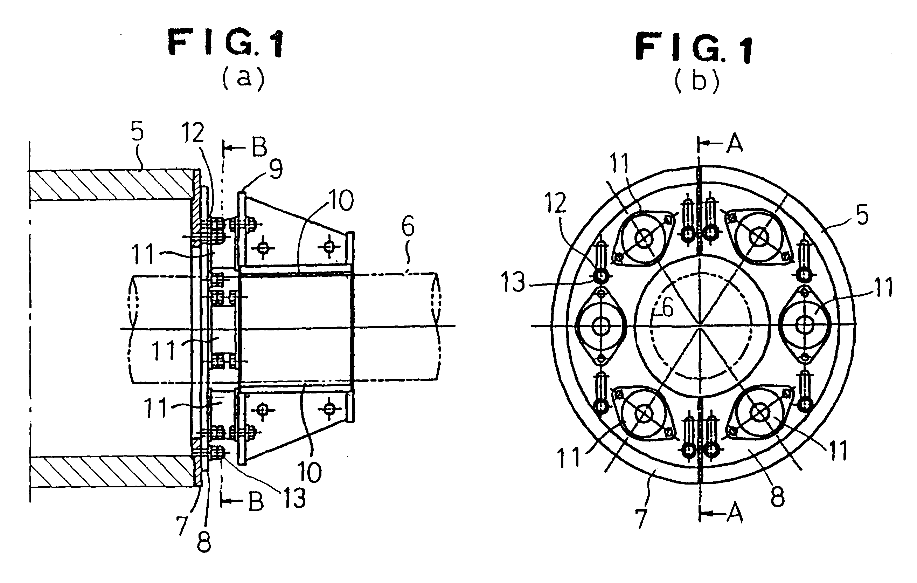

One embodiment of the invention in an assembled state is shown in Figs. 1(a) and 1(b). It is noted that, in this case, a cable is arranged in a non-eccentric relationship relative to an anchor pipe.

In the drawings, reference numeral 5 designates an anchor pipe. The anchor pipe 5 is secured, at its proximal end, to a girder of a tower of a bridge construction. Reference numeral 6 designates a cable. The cable 6 is drawn into an the anchor pipe 5 and anchored, at its left-hand end when viewed in Fig. 1(a), to the girder of a tower of a bridge. Reference numeral 7 designates an anchor flange. The anchor flange 7 is secured, by welding, to the free end of the anchor pipe 5. Reference numeral 8 designates an aligning flange. The aligning flange 8 is superposed on the anchor flange 7 and secured to the anchor flange 7 by means of a plurality of bolts. Reference numeral 9 designates a cable flange. The cable 6 is clamped by the cable flange 9 with a rubber sheet 10 being interposed therebetween. Reference numeral 11 designates rubber bearings (six in the illustrated embodiment) of a high damping characteristic formed from a visco-elastic body. The rubber bearings 11 are disposed between the aligning flange 8 and the cable flange 9. The rubber bearings 11 are secured, by means of bolts, at positions distributed equidistantly in the circumferential direction, whereby the aligning flange 8 and the cable flange 9 are connected together.

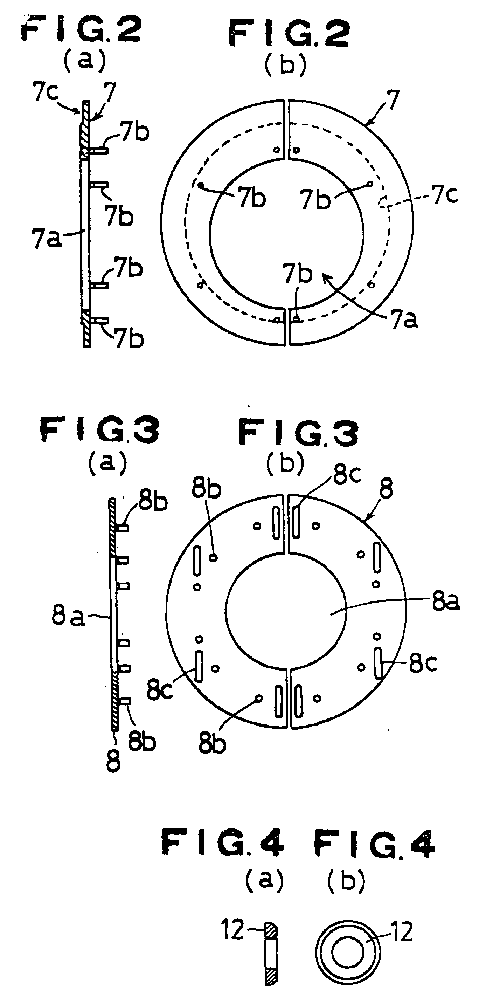

The anchor flange 7 includes, as shown in Figs. 2(a) and 2(b), an opening 7a eccentrically disposed or offset with respect to the outer diameter thereof, and stud bolts 7b disposed at angular positions around the opening 7a for attachment of the aligning flange 8 on the anchor flange 7. A stepped portion 7c is formed in the peripheral portion of the anchor flange 7 for securely aligning the anchor flange 7 with respect to the end of anchor pipe 5.

The aligning flange 8 includes, as shown in Figs. 3(a) and 3(b), an opening 8a, a plurality of stud bolts 8b and a plurality of slotted holes 8c or elongated holes (mounting portions) 80. The opening 8a is located centrally of the aligning flange 8 in an concentric manner with the outer diameter of the opening 8a. The opening 8a has a diameter sufficient for freely accommodating the cable 6 therein. The stud bolts 8b are arranged in the circumferential direction along a circle which is in an concentric relationship with the opening 8a. Each of the stud bolts 8b serves as a visco-elastic mounting seat. Each of the slotted holes 8c is configured so as to slidably receive therein a corresponding stud bolt 7b. The slotted holes 8c are formed in alignment with the direction in which the opening 7a is offset as mentioned above (this direction will be simply referred to as "offset direction" in this specification). The stud bolts 7b of the anchor flange 7, having been passed through the respective slotted holes 8c, are tightened by means of nuts 13, as shown in Figs. 1(a) and 1(b), with a corresponding washer 12 shown in Figs. 4(a) and 4(b) being interposed therebetween.

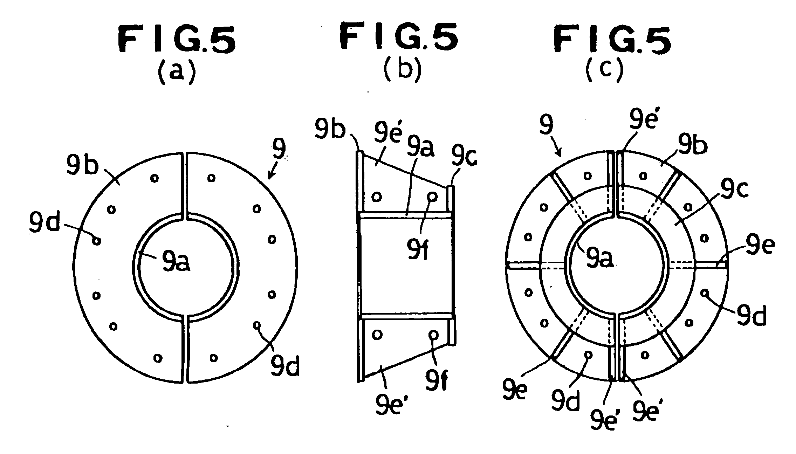

The cable flange 9 includes, as shown in Figs. 5(a), 5(b) and 5(c), a tube 9a split into two halves in the longitudinal direction, and a flange of a larger diameter 9b and a flange 9c of a smaller diameter attached to the forward and rearward ends of the tube 9a, respectively. The flange 9b of a larger diameter is provided, along its periphery, with apertures 9d for attachment of a respective high-damping rubber bearing 11 to the flange 9b. The tube 9a is formed, in its outer periphery, with a plurality of reinforcing ribs 9e connecting the flanges 9b and 9c together. The pair of ribs 9e', oppositely disposed at each location at which the tube 9a is split into two halves, are formed with apertures 9f. A bolt is inserted through each aperture 9f so as to cause the two halves of the tube 9a to be tightened together.

The rubber sheet 10 is thinned at its longitudinal (the direction in which the sheet is wound) opposite ends. Thus, the rubber sheet 10 may be easily contacted on the outer peripheral surface of the cable 6 when the rubber sheet 10 is clamped between the cable flange 9 and the cable 6.

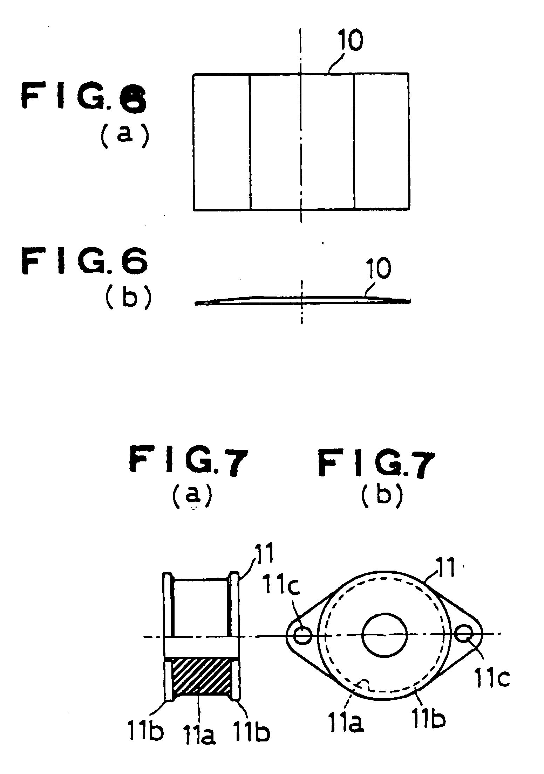

Each of the high-damping rubber bearing 11 includes, as shown in Figs. 7(a) and 7(b), a pair of mounting flanges 11b and 11b, and a high-damping rubber body 11a of a visco-elastic material. The high-damping rubber body 11a is disposed between the pair of mounting flanges 11b and 11b and bonded integrally with the mounting flanges 11b and 11b by means of vulcanisation. The high-damping rubber bearing 11 absorbs vibrational energy by converting shear deformation into thermal energy. The high-damping rubber bearing 11 is secured to the aligning flange 8 and the cable flange 9 by means of bolts inserted in mounting holes 11c formed in the opposite ends of each of the mounting flanges 11b and 11b.

The cable 6 and the anchor pipe 5 of the cable damping device according to the above-mentioned embodiment are fixed to the structure of a diagonal stress bridge when the construction work in-progress thereof has reached a predetermined location. The remaining parts of the cable damping device are attached to the structure when the diagonal stress bridge is nearly completed. Thus, each of the anchor flange 7 and the aligning flange 8 is also split into two halves (left-hand and right-hand halves), in a manner same as that of the cable flange 9.

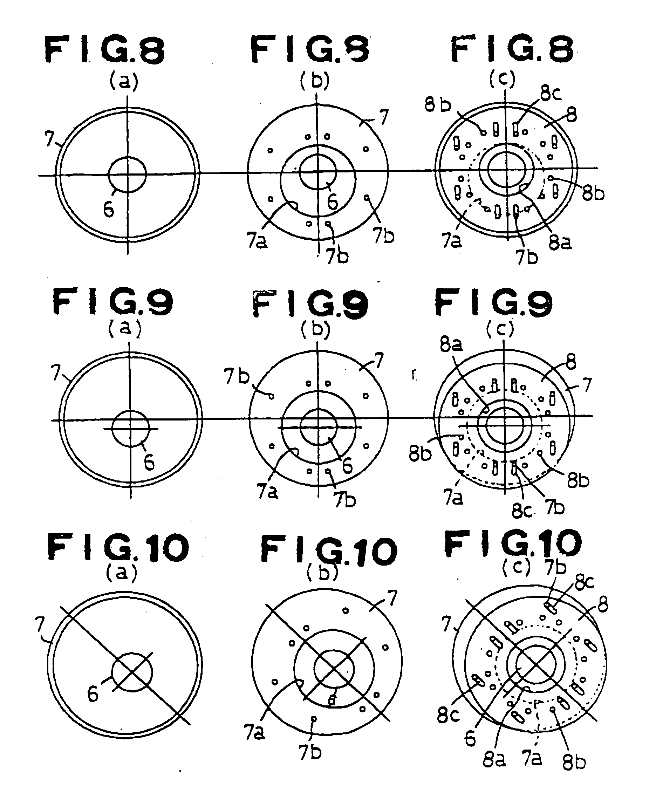

The aligning flange 8 of the cable damping device is constructed to adjust eccentricity of the cable 6 relative to the anchor pipe 5. The mounting method of the aligning flange 8 of the cable damping device will be explained below with regard to three examples shown in Figs. 8 to 10.

When the anchor pipe 5 and the cable 6 are arranged in a concentric relationship relative to one another, as shown in Fig. 8(a), the anchor flange 7 may be oriented in any direction. If the anchor flange 7 is mounted as shown in Fig. 8(b), mounting of the aligning flange 8 is performed first by inserting the stud bolts 7b into the respective slotted holes 8c, as shown in Fig. 8(c). Then, the aligning flange 8 is slidably moved in the direction opposite to the offset direction of the opening 7a, so as to cause the opening 8a of the aligning flange 8 and the cable 6 to be aligned in a concentric relationship. Since the stud bolts 8b formed on the aligning flange 8 for mounting the high-damping bearings are arranged on a circle in concentric with the aperture 8a, as shown in Fig. 3, it is possible for the high-damping bearings to be mounted at rotationally symmetrical positions with respect to the center of the cable 6. The rotationally symmetrical positions correspond to the positions of the high-damping rubber bearings 11 of the cable flange 9 which are arranged so as to encircle the cable 6.

When the cable 6 is offset in a downward direction with respect to the anchor pipe 5, as shown in Fig. 9(a), the anchor flange 7 is secured by welding to the anchor pipe 5, with the opening 7a of the anchor flange being disposed at a lower position, as shown in Fig. 9(b). With this state, mounting of the aligning flange 8 is performed by slidably moving the aligning flange 8 in the direction the same as the offset direction of the opening 7a, so as to cause the opening 8a of the aligning flange and the cable 6 to be aligned in a concentric relationship, as shown in Fig. 9(c). At this time, the outer diameter of the aligning flange 8 is offset from the outer diameter of the anchor flange 7, but is arranged in concentric relationship with regard to the cable 6 and the cable flange 9, so that the high-damping rubber bearings 11 may be disposed at proper positions.

When the cable 6 is offset in a downward and right-hand direction with respect to the anchor pipe 5, as shown in Fig. 10(a), the anchor flange 7, with its mounting direction oriented in a downward and right-hand direction, and the aligning flange 8, with its slide direction in a downward and right-hand direction, are mounted, as shown in Figs. 10(b) and 10(c), substantially in accordance with the example of Fig. 9. In this case, the opening 8a of the aligning flange 8 and the cable 6 are also arranged in a concentric relationship relative to one another, so that mounting positions of the high-damping bearings 11 correspond to the cable flange 9.

With the aligning flange 8 mounted as shown in Fig. 8(c), Fig. 9(c) or Fig. 10(c), the high-damping rubber bearings 11 are secured, by bolts, to the aligning flange 8. Then, the cable flange 9, with its apertures 9d aligned with the positions of the high-damping rubber bearings 11, is mounted so as to encircle the cable 6. The high-damping rubber bearings 11 are secured, by bolts, to the cable flange 9. Finally, the two halves of the cable flange 9 are fastened together by means of bolts, whereby mounting operation is completed.

The cable damping device assembled as shown in Fig. 1 is capable of very effectively restricting vibration of the cable 6. This is because that, when the cable 6 is vibrated relative to the fixed or stationary anchor pipe 5 due to wind, rain or the like, shear deformation of the visco-elastic bodies 11a of the high-damping rubber dampers 11 is caused due to the relative movement between the aligning flange 8 and the cable flange 9. The shear deformation causes internal loss which contributes to restriction of vibration of the cable 6.

The above embodiment is explained with regard to the anchor flange 7 having an opening 7a offset with respect to its outer diameter, as shown in Fig. 2, and with regard to the aligning flange 8 having an opening 8a in concentric with its outer diameter, as shown in Fig. 3. It is noted, however, that, as shown in Figs. 11(a), 11(b) and 11(c), the anchor flange 7 may include an opening 7a' in concentric with its outer diameter, and that the aligning flange 8 may include an opening offset with respect to its outer diameter. Such anchor flange and aligning flange may be mounted in a manner similar to that mentioned above.

In this connection, it is noted that, when the anchor flange 7 includes an opening 7a' in concentric with its outer diameter, the opening should have a diameter greater than that of the opening 7a which is offset with respect to the outer diameter of the anchor flange 7.

In the above embodiment, the anchor flange 7 is secured to the anchor pipe 5 by means of welding. It is noted, however, that the anchor pipe 5 may be provided, in its end surface, with threaded holes 14, so that the anchor flange 7 is bolted to the anchor pipe 5.

When sixteen (16) threaded holes 11 are formed at positions which are equidistantly distributed along a circle on the end surface of the anchor pipe 5, the rotational position of the anchor flange 7 may be adjusted by an angular pitch of 22.5 degrees depending upon a given degree of eccentricity of the cable 6. When twenty four (24) threaded holes 11 are formed, the rotational position of the anchor flange 7 may be adjusted by an angular pitch of 15 degrees.

The cable damping device according to the invention is so constructed that the aligning flange 8 may be mounted, with the opening thereof being eccentrically disposed, in accordance with the direction of eccentricity of the cable 6. By this, the centers of the positions, at which the high-damping rubber bearings are mounted on the aligning flange 8 and the cable flange 9, may be always maintained in a concentric relationship. Thus, any useless efforts to align the anchor pipe 5 with the longitudinal center of the cable 6 during fabrication work may be obviated. Accordingly, the high-damping rubber bearings 11 may be easily mounted between the aligning flange 8 and the cable flange 9, without causing any excess strain or deformation in the rubber bearings.

It will further be obvious to those skilled in the art that many variations may be made in the above embodiments, here chosen for the purpose of illustrating the present invention, and full result may be had to the doctrine of equivalents without departing from the scope of the present invention, as defined by the appended claims.

## Claims

1. A cable damping device including an anchor pipe (5) suitable for housing therein a fixed end of a cable (6), an anchor flange (7) disposed at a free end of the anchor pipe (5) for encircling the cable (6) in a non-contact relationship therewith, a cable flange (9) attached to the cable (6), and a plurality of viscoelastic bodies (11) mounted between the anchor flange (7) and the cable flange (9), characterized in that said cable damping device comprises:
an aligning flange (8) including a plurality of mounting portions to be mounted on said anchor flange (7) in an eccentric relationship with said anchor flange (7), and a plurality of mounting seats (8b) on which said visco-elastic bodies (11) disposed around said cable (6) are mounted, whereby said aligning flange (8) may be mounted on said anchor flange in a manner that the center defined by said plurality of mounting seats (8b) is aligned with the longitudinal center of said cable (6), and that said plurality of visco-elastic bodies (11) are clamped between said aligning flange (8) and said cable flange (9).

2. The cable damping device according to Claim 1, wherein said mounting portions of said aligning flange (8) include a plurality of slotted holes (8c), said slotted holes (8c) being formed through said aligning flange (8) with the longitudinal axes of said slotted holes (8c) being aligned in one direction, whereby a plurality of bolts (7b) protruding from said anchor flange (7) may be slidably received in said slotted holes (8c).

3. The cable damping device according to Claim 1 or 2, wherein said anchor flange (7), said cable flange (9) and said aligning flange (8) are of a split construction, so that they may be mounted to said cable (6) and said anchor pipe (5) at a later time.

4. The cable damping device according to Claim 1 or 2, wherein said anchor flange (7) is adapted to be secured to said anchor pipe (5) by means of bolts.

## Patentansprüche

1. Kabeldämpfvorrichtung, enthaltend ein Ankerrohr (5), welches zur Aufnahme eines ortsfesten Endes eines Kabels (6) geeignet ist, einen Ankerflansch (7), welcher an einem freien Ende des Ankerrohrs (5) angeordnet ist, um das Kabel (6) berührungslos zu umgeben, einen Kabelflansch (9), der an dem Kabel (6) angebracht ist, und mehrere viskoelastische Körper (11), die zwischen dem Ankerflansch (7) und dem Kabelflansch (9) angeordnet sind,
**dadurch gekennzeichnet**, daß die Kabeldämpfvorrichtung enthält:
einen Ausrichtflansch (8), der mehrere an dem Ankerflansch (7) in einer exzentrischen Beziehung gegenüber dem Ankerflansch (7) zu montierende Montageabschnitte und mehrere Montagesitze (8b) aufweist, an denen die viskoelastischen Körper (11), welche um das Kabel (6) herum angeordnet sind, angebracht werden, wobei der Ausrichtflansch (8) an dem Ankerflansch in einer Weise angebracht werden kann, daß die durch die Montagesitze (8b) definierte Mitte mit der Längsmitte des Kabels (6) ausgerichtet ist, und
daß die viskoelastischen Körper (11) zwischen dem Ausrichtflansch (8) und dem Kabelflansch (9) eingespannt sind.

2. Kabeldämpfvorrichtung nach Anspruch 1,
bei der die Montageabschnitte des Ausrichtflansches (8) mehrere Schlitzlöcher (8c) aufweisen, die in dem Ausrichtflansch (8) hindurchgehend ausgebildet sind und deren Längsachsen in einer Richtung ausgerichtet sind, wobei mehrere Bolzen (7b), die von dem Ankerflansch (7) hervorstehen, verschiebbar in den Schlitzlöchern (8c) aufgenommen werden können.

3. Kabeldämpfvorrichtung nach Anspruch 1 oder 2,
bei der der Ankerflansch (7), der Kabelflansch (9) und der Ausrichtflansch (8) eine geteilte Konstruktion bilden, so daß sie an dem Kabel (6) und dem Ankerrohr (5) nachträglich angebracht werden können.

4. Kabeldämpfvorrichtung nach Anspruch 1 oder 2,
bei der der Ankerflansch (7) mittels Bolzen an dem Ankerrohr (5) anbringbar ist.

## Revendications

1. Dispositif amortisseur pour câbles, englobant un tuyau d'ancrage (5), destiné à recevoir une extrémité fixe d'un câble (6), une bride d'ancrage (7) agencée au niveau d'une extrémité libre du tuyau d'ancrage (5), pour encercler le câble (6) sans le contacter, une bride de câble (9) fixée au câble (6), et plusieurs corps viscoélastiques (11), montés entre la bride d'ancrage (7) et la bride du câble (7), caractérisé en ce que ledit dispositif amortisseur pour câbles comprend:
une bride d'alignement (8) englobant plusieurs parties de montage, destinées à être montées sur ladite bride d'ancrage (7), de manière excentrique par rapport à ladite bride d'ancrage (7), et plusieurs logements de montage (8b), sur lesquels sont montés lesdits corps viscoélastiques (11) agencés autour dudit câble (6), ladite bride d'alignement (8) pouvant ainsi être montée sur ladite bride d'ancrage de sorte que le centre défini par lesdits plusieurs logements de montage (8b) est aligné avec le centre longitudinal dudit câble (6), lesdits plusieurs corps viscoélastiques (11) étant serrés entre ladite bride d'alignement (8) et ladite bride du câble (7).

2. Dispositif amortisseur pour câbles selon la revendication 1, dans lequel lesdites parties de montage de ladite bride d'alignement (8) englobent plusieurs trous en fente (8c), lesdits trous en fente (8c) étant formés à travers ladite bride d'alignement (8), les axes longitudinaux desdits trous en fente (8c) étant alignés dans une direction, plusieurs boulons (7b) débordant de ladite bride d'ancrage (7) pouvant ainsi être reçus par glissement dans lesdits trous en fente (8c).

3. Dispositif amortisseur pour câbles selon les revendications 1 ou 2, dans lequel ladite bride d'ancrage (7), ladite bride du câble (9) et ladite bride d'alignement (8) ont une construction séparée, de sorte à pouvoir être montées ultérieurement sur ledit câble (6) et ledit tuyau d'ancrage (5).

4. Dispositif amortisseur pour câbles selon les revendications 1 ou 2, dans lequel ladite bride d'ancrage (7) est destinée à être fixée sur ledit tuyau d'ancrage (5) par l'intermédiaire de boulons.
